**Europäisches Patentamt**

**European Patent Office**

**Office européen des brevets**

(19)

(11) Publication number: **0 133 045**
**B1**

(12) **EUROPEAN PATENT SPECIFICATION**

(45) Date of publication of patent specification: **29.11.89**

(51) Int. Cl.⁴: **G 11 B 15/10**

(21) Application number: **84305175.6**

(22) Date of filing: **30.07.84**

(54) Cassette tape recording and/or reproducing apparatus.

(30) Priority: **30.07.83 JP 119650/83 u**

(43) Date of publication of application:
**13.02.85 Bulletin 85/07**

(45) Publication of the grant of the patent:
**29.11.89 Bulletin 89/48**

(84) Designated Contracting States:
**AT DE FR GB IT NL**

(56) References cited:
**DE-A-2 535 814**
**DE-A-3 219 258**

(73) Proprietor: **SONY CORPORATION**
**7-35 Kitashinagawa 6-Chome Shinagawa-ku**
**Tokyo 141 (JP)**

(72) Inventor: **Ida, Mitsura c/o Sony Corporation**
**Patents Division 7-35 Kitashinagawa 6-chome**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

**Description**

This invention relates to cassette tape recording and/or reproducing apparatus, and more particularly is concerned with the mode changing mechanism thereof.

Various mechanisms have been proposed for changing or selecting the operating mode of cassette tape recording and/or reproducing apparatus. Such mechanisms generally include numerous slides, levers and rotary members for selecting or establishing the different modes, respectively, of the apparatus. Moreover, springs are provided for returning the slide members and levers and for holding the rotary members in their neutral or inoperative positions, and each of these springs has to be individually connected to the respective parts. Particularly in those mode changing mechanisms provided with a plurality of rotary members which are separately employed for driving the tape reels at different speeds, for example, the normal speed for recording and reproducing or playback, and the high speed for the fast-forward and rewind modes, an undesirably large number of parts are required for the mode changing mechanism so that the assembling thereof is difficult, time consuming and costly.

German patent application DE-A-3 219 258 discloses a tape deck auto-reverse mechanism comprising a chassis, first and second mode selecting slide members, a pivot arm carrying a transmission member, and a coupling member straddling the slide members and engageable with first and second actuating members on the slide members, whereby the movement of one slide member to its operative position causes the coupling member to turn and so shift the transmission member.

According to the present invention there is provided a cassette tape recording and/or reproducing apparatus having tape drive means including a transmission member which is shiftable for changing the operation mode of said tape drive means, and including a mode changing mechanism comprising:

a chassis.

first and second mode selecting slide members mounted on said chassis for movements relative to said chassis independently of each other along substantially parallel paths between respective operative and inoperative positions;

a pivot arm member carrying a post and said transmission member of the tape drive means and being movable for shifting said transmission member; a coupling member straddling said first and second slide members and engageable with said post on said pivot arm member, and also engageable with first and second actuating members on said first and second slide members, respectively, at first and second locations, respectively, spaced apart in a direction transverse to said parallel paths of movement of said slide members;

and a tension spring connected between said chassis and said coupling member and acting on said coupling member at a position intermediate between said first and second locations and in a direction transverse to the line connecting said first and second locations for simultaneously urging said coupling member against said first and second actuating members and thereby urging both of said first and second slide members to said inoperative positions thereof;

wherein the movement of a selected one of said slide members to its operative position is effective to turn said coupling member about the actuating member on the other of said slide members and thereby effect movement of said pivot arm member via said post and shifting of said transmission member for establishing a corresponding mode of said tape drive means.

The invention will now be described by way of example with reference to the accompanying drawings, throughout which like parts are referred to by like references, and in which:

Figure 1 is a schematic plan view on an enlarged scale, and partly broken away and in section, of a tape drive for a cassette tape recording and/or reproducing apparatus;

Figure 2 is a plan view of a mode changing mechanism for an embodiment of cassette tape recording and/or reproducing apparatus according to the invention;

Figures 3A, 3B and 3C are enlarged plan views of a substantial portion of the mode change mechanism of Figure 2, showing the condition of such mechanism for establishing the play mode, the fast-forward mode and the rewind mode of the apparatus;

Figure 4 is a perspective view of a coupling member included in the mode changing mechanism;

Figures 5A, 5B and 5C illustrate the condition of the coupling member of Figure 4 for establishing the stop mode, the fast-forward mode and the rewind mode, respectively, of the apparatus;

Figure 6 is an enlarged plan view of that portion of the mode changing mechanism shown in Figure 2 provided for actuating switches by which the tape drive motor is controlled;

Figure 7 is an exploded perspective view of switch actuating elements and associated parts shown in Figure 6;

Figure 8 is a sectional view taken along the line VIII-VIII in Figure 6;

Figure 9 is a sectional view taken along the line IX-IX in Figure 6;

Figure 10 is a sectional view taken along the line X-X in Figure 9;

Figures 11A, 11B and 11C are plan views, similar to that of Figure 6, but showing the positions of the switch actuating elements for the play mode, fast-forward mode, and rewind mode, respectively, of the apparatus;

Figure 12 is an enlarged detail elevational view of a screw member included in the mode changing mechanism;

Figure 13 is an exploded perspective view of a push-button assembly and associated elements included in the mode changing mechanism;

Figure 14 is a perspective view of the elements shown in Figure 13, but appearing in their assembled condition;

Figure 15 is a sectional view taken along the line XV-XV in Figure 14.

Figure 16 is a plan view showing a latching device associated with the mode selecting slide members and respective push-button assemblies in the mode changing mechanism;

Figures 17A and 17B are sectional views taken along the line XVII-XVII in Figure 16, and which show the play mode selecting slide member in its inoperative and operative positions, respectively;

Figure 18 is a sectional view taken along the line XVIII-XVIII in Figure 16.

Figure 19 is an enlarged fragmentary sectional view taken along the line XIX-XIX in Figure 16;

Figure 20 is a fragmentary sectional view taken along the line XX-XX in Figure 16; and

Figure 21 is an exploded perspective view of elements included in the latching device of the mode changing mechanism.

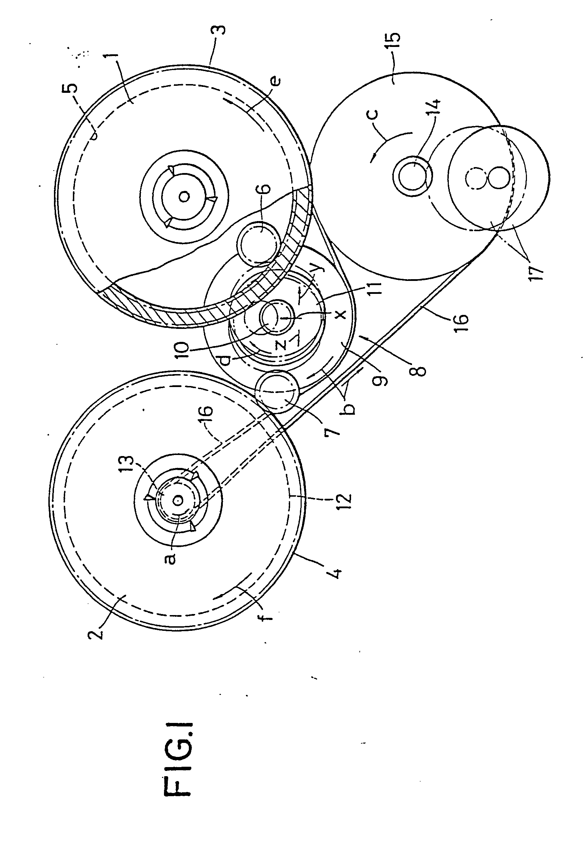

Referring to the drawings in detail, the embodiment to be described is a portable cassette tape recording and/or reproducing apparatus of the kind arranged to accommodate a cassette containing rotatable supply and take-up reels in side-by-side arrangement, with the magnetic tape wound on the reels being guided therebetween in a run extending along a straight side of the cassette and being there exposed through windows in the peripheral wall of the cassette. Thus, the cassette tape recording and/or reproducing apparatus for accommodating such a standard cassette is shown in Figure 1 to include take-up and supply reel drive members 1 and 2 shown in the form of discs rotatable about transversely spaced apart axes and having outer gears 3 and 4, respectively, rotatably coupled therewith. The take-up reel drive member 1 is further shown to have an inner or internal gear 5 rotatably coupled therewith, and intermediate gears 6 and 7 are in permanent meshing engagement with the inner gear 5 and the outer gear 4, respectively. Located approximately midway between the intermediate gears 6 and 7 is an idler or transmission member 8 which includes, as integral parts thereof, a pulley 9, a relatively small diameter forward (FWD) gear 10, and a fast-forward or rewind (FR) gear 11 of relatively large diameter. A relatively flat motor 12 capable of operating at a normal speed and a relatively high speed is coaxially mounted below the supply reel drive member 2 and has a motor pulley 13 secured on its shaft. A capstan 14 with a fly wheel 15 fixed thereto is rotatably mounted to extend into an operatively positioned cassette, and is rotatably driven from the pulley 13 by way of an endless belt 16 which runs around the pulley 13 and a pulley defined by the periphery of the fly wheel 15, and which further engages the pulley 9 of the idler 8 for also rotating the idler 8. A pinch roller 17 is suitably mounted adjacent to the capstan 14 so as to be movable from an inoperative position shown in full lines in Figure 1 to an operative position shown in dot-dash lines and in which the pinch roller 17 extends into a window of the operatively positioned cassette for pressing a run of the tape therein against the rotated capstan 14.

In the stop mode of the apparatus represented by the full lines in Figure 1, the idler 8 is disposed in a neutral position in which the FWD gear 10 is disengaged from the outer gear 3 of the take-up reel drive member 1 and the FR gear 11 is disengaged from both the intermediate gears 6 and 7.

In a play mode of the apparatus, the motor 12 is suitably operated to rotate the pulley 13 in the direction of the arrow a and thereby drive the belt 16 in the direction of the arrows b. Therefore, the capstan 14 and the idler 8 are rotated in the directions of the arrows c and d, respectively. Moreover, in the play mode of the apparatus, the idler 8 is moved or shifted from its neutral position in the direction of the arrow x, as hereinafter described in detail, so that the FWD gear 10 is brought into meshing engagement with the outer gear 3, as shown in dot-dash lines, so as to effect rotation of the take-up reel drive member 1 in the direction of the arrow e. Also in the play mode, the pinch roller 17 is suitably moved into engagement with the capstan 14, as shown in dot-dash lines, so that the tape is fed therebetween by the rotated capstan 14 at a constant speed and is wound onto the take-up reel of the cassette engaged with the take-up reel drive member l.

In a fast-forward mode of the apparatus, the motor 12 is again operated, but preferably at a relatively high speed, as hereinafter described in detail, with the result that the idler 8 is rotated at a relatively high speed in the direction of the arrow d. In the fast-forward mode, the pinch roller 17 remains in its inoperative position shown in full lines in Figure 1, and the idler 8 is moved from its neutral position in the direction of the arrow Y so that the FR gear 11 is brought into meshing engagement with the intermediate gear 6, as shown in dot-dash lines in Figure 1. Therefore, in the fast-forward mode, the take-up reel drive member 1 is rotated in the direction of the arrow e at a relatively high speed, with the result that the tape is quickly unwound from the supply reel engaged with the supply reel drive member 2 and similarly quickly rewound on the take-up reel engaged with the tape-up drive member l.

In the rewind mode of the apparatus, the motor 12 is again operated at high speed and thereby drives the idler 8 at high speed in the direction of the arrow d. However, in this case, the idler 8 is moved or shifted from its neutral position in the direction of the arrow Z so that the FR gear 11 now meshes with the intermediate gear 7, as shown in dot-dash lines, with the result that the supply reel drive member 2 is rotated at relatively high speed in the direction of the arrow f. Thus, the tape is quickly unwound from the take-up reel engaged by the take-up reel drive member 1 and is rapidly rewound on the supply reel engaged with the supply reel drive member 2.

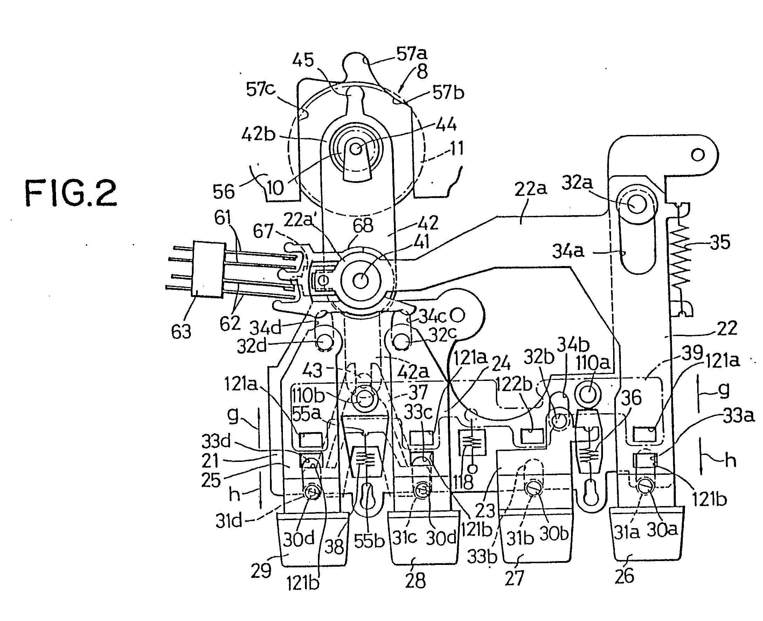

Referring now to Figure 2, it will be seen that a mode changing mechanism for the cassette tape recording and/or reproducing apparatus described with reference to Figure 1 generally comprises a sub-chassis 21 and mode selecting slide members 22, 23, 24 and 25 slidably mounted on the sub-chassis 21 for movements relative to the sub-chassis 21 independently of each other along substantially parallel paths in the directions indicated by the arrows g and h. More particularly, the slide members 22 to 25 are selectively movable independently of each other in the direction of the arrow g from their respective inoperative positions shown in Figure 2 for selecting the play mode, the stop mode, the fast forward and the rewind mode, respectively, of the apparatus. The push-buttons 26, 27, 28 and 29 are secured to forward ends of the slide members 22 to 25, respectively, by screws 30a, 30b, 30c and 30d which are threadably engaged in collars 31a, 31b, 31c and 31d depending integrally from the slide members 22 to 25, respectively. Thus, the push-buttons 26 to 29 can be selectively manually depressed for selecting the play, stop, fast-forward and rewind modes, respectively, of the apparatus.

For the purpose of guiding the slide members 22 to 25 in their movements in the directions of the arrows g and h, the collars 31a to 31d depending from slide members 22 to 25 are slidably received in suitably laterally spaced apart slots 33a, 33b, 33c and 33d formed in the forward portion of the sub-chassis 21. Posts 32b, 32c and 32d depend from the slide member 23, 24 and 25, respectively, at locations spaced rearwardly from the collars 31b, 31c and 31d and are slidably engaged in the slots 34b, 34c and 34d, respectively, in the sub-chassis 21 for maintaining the slide members 23 to 25 in parallel relation during their movements between inoperative and operative positions. Similarly, a post 32a is directed upwardly from a rear portion of the sub-chassis 21 and is slidably engaged in an elongated slot 34a formed in an end portion of the slide member 22 remote from the respective push-button 26. The slide member 22 for selecting the play mode is urged in the direction of the arrow h to its inoperative position by a spring 35 connected between suitable anchors on the sub-chassis 21 and the slide member 22. Similarly, the slide member 23 for selecting the stop mode is urged in the direction of the arrow h to its inoperative position by a spring 36 connected between an anchor on the slide member 23 and a suitable anchor hole in a forward portion of the sub-chassis 21.

A coupling member 37 which is located below the sub-chassis 21 straddles the paths of the slide members 24 and 25 and is acted upon by a single spring 38 connected between the coupling member 37 and the sub-chassis 21 for simultaneously urging both the slide members 24 and 25 in the direction of the arrow h to their respective inoperative positions. The mode changing mechanism further generally comprises a latch plate 39 disposed above the slide members 22 to 25 for locking or latching any one of the slide members 22, 24 and 25 in its operative position after the slide member 22, 24 or 25 has been displaced in the direction of the arrow g and for selecting the play mode, the fast-forward mode or the rewind mode, respectively, of the apparatus.

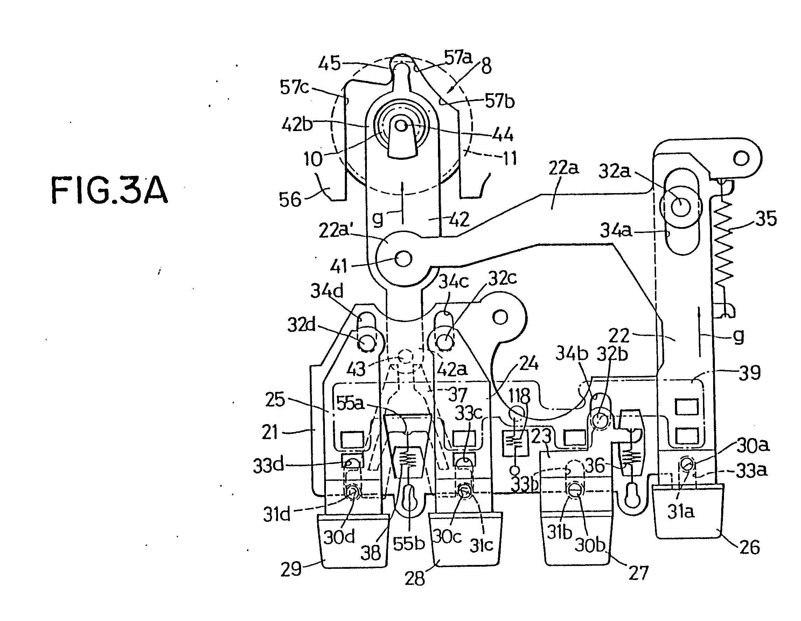

As shown particularly in Figures 2 and 3A to 3C, the slide member 22 for selecting the play mode is formed, at its rear portion, with a laterally directed arm 22a having a free end portion 22a' located approximately midway between the parallel paths of movement of the slide members 24 and 25. A pivot pin 41 depends from the end portion 22a' and defines a pivot axis for a pivot arm 42 which is mounted, intermediate its ends, on the pin 41. A post or pin 43 depends from the forward end portion 42a of the pivot arm 42 and is engageable by the coupling member 37 below the sub-chassis 21 as hereinafter described in detail. The opposite or rear end portion 42b of the pivot arm 42 carries a shaft 44 on which the idler 8 is rotatably supported. A projection 45 extends from the end portion 42b of the pivot arm 42 for stabilizing the position of the pivot arm 42 in the play mode of the apparatus, as hereinafter described in detail.

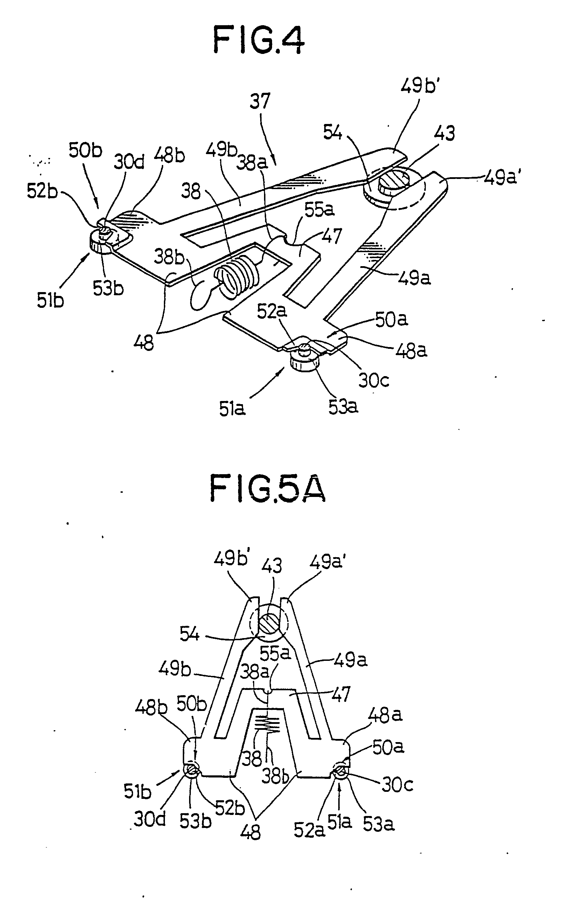

As shown particularly in Figures 4 and 5A to 5C, the coupling member 37 for forming a connection between the slide members 24 and 25 and the pivot arm 42 below the sub-chassis 21 may be formed of a plate spring metal and has a U-shaped central portion 47 with flanks 48 extending laterally outward from the ends of the central portion 47, and resilient arms 49a and 49b converging rearwardly from the flanks 48 to the free ends 49a' and 49b' which have parallel spaced apart edges between which the post 43 is slidably received. Receptacles 50a and 50b are defined at the outer ends 48a and 48b of the flanks 48 for receiving actuating members 51a and 51b on the slide members 24 and 25, respectively. The receptacles 50a and 50b are defined by notched bosses 52a and 52b formed at the respective ends of the flanks 48, and the actuating members 51a and 51b are formed by grooves 53a and 53b formed in the lower end portions of the screws 30c and 30d, as hereinafter described in detail. The post or pin 43 depending from the forward end of the pivot arm 42 preferably has a flange 54 at its lower end to guide the end portions 49a' and 49b' of the resilient arms 49a and 49b in engagement with the pin 43.

As shown in detail in Figure 4, the spring 38 for urging the coupling member 37 in the direction of the arrow h in Figure 2 has a hook 38a at one end engageable in a recess 55a of central portion 47, while a hook 38b at the other end of the spring 38 is engaged in an anchor hole 55b (Figure 3A) formed in the adjacent forward portion of the sub-chassis 21.

To the extent so far described, the mode changing mechanism operates as follows:

In the stop mode of the apparatus illustrated in Figure 2, the slide members 22 to 25 and the respective push-buttons 26 to 29 are moved in the direction of the arrow h to their inoperative positions by means of the springs 35, 36 and 38. As shown in Figure 5A, in the stop mode, the spring 38 acts on the coupling member 37 along a line of force intermediate between the locations at which the receptacles 50a and 50b engage the actuating members 51a and 51b, respectively. Thus, the spring 38 urges the coupling member 37 in the direction of the arrow h, so that receptacles 50a, and 50b are urged against the actuators 51a and 51b for similarly urging the slide members 24 and 25 to their inoperative positions. With the slide member 22 in its inoperative position, and with the coupling member 37 squarely oriented, as shown in Figure 5A, in response to the inoperative positions of the slide members 24 and 25, the pivot arm 42 is disposed to locate the idler 8 in its neutral position.

When the slide member 22 is moved in the direction of the arrow g for establishing the play mode of the apparatus, as shown in Figure 3A, the pivot arm 42 undergoes a similar translational movement in the direction of the arrow g by reason of its mounting on the arm 22a. At least during a major portion of such translational movement of the pivot arm 42, the pin or post 43 at the forward end 42a of the pivot arm 42 is guided by the end portions 49a' and 49b' of the resilient arms 49a and 49b so that the pivot arm 42 is moved parallel to the direction of movement of the slide member 22. In response to such translational movement of the pivot arm 42, the idler 8 is moved in the direction of the arrow x in Figure 1 to engage the FWD gear 10 with the outer gear 3 of the take-up reel drive member 1, thereby establishing the play mode of the apparatus. Further, at the conclusion of the translational movement of the pivot arm 42, the projection 45 at the rear end of the pivot arm 42 engages in a guide recess 57a formed in a chassis plate 56 so that the pivot arm 42 is then stably held in a position where the FWD gear 10 meshes with the outer gear 3. Of course, the movement of the slide member 22 to its operative position for selecting the play mode is also suitably effective to move a head base plate (not shown) to its operative position with the result that a magnetic head (not shown) and the pinch roller 17 on the head base plate will be moved into contact with the magnetic tape, as is conventional.

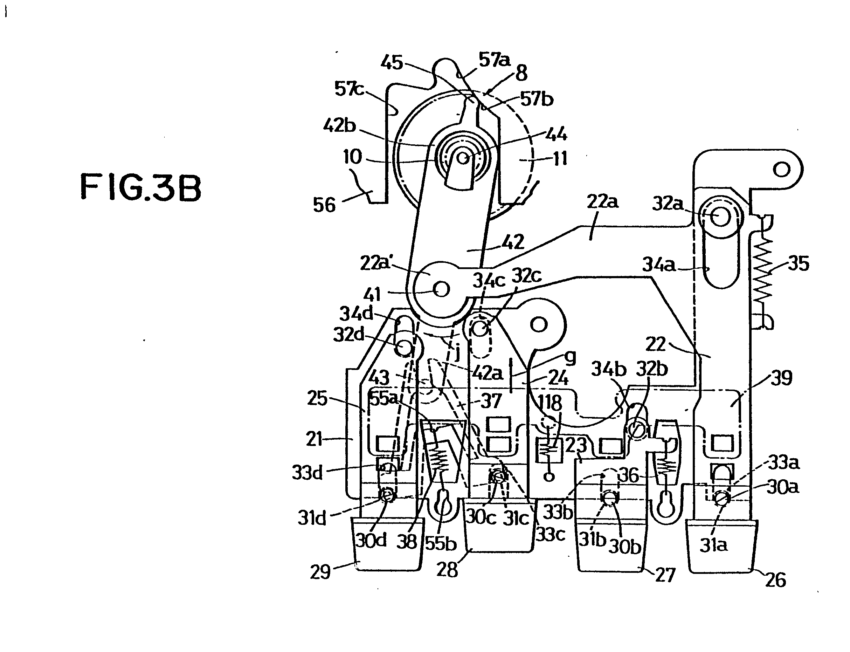

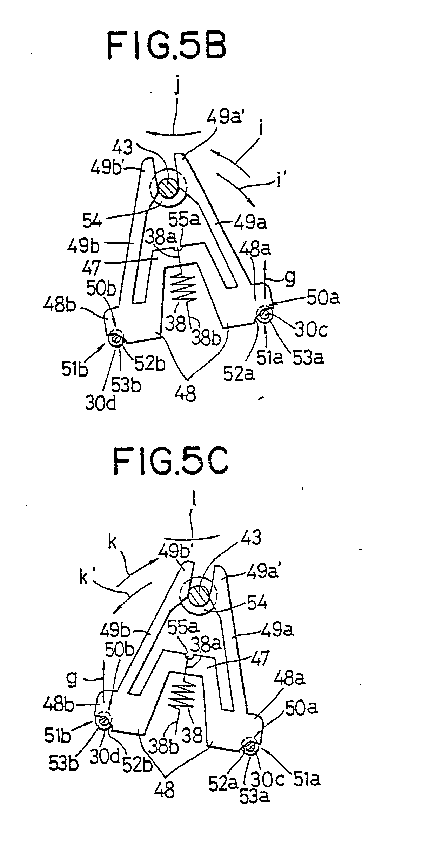

Referring now to Figures 3B and 5B, it will be seen that in response to the movement of the slide member 24 in the direction of the arrow g to its operative position, the actuating member 51a thereon pushes the respective receptacle 50a in the direction of the arrow g, so that the coupling member 37 is turned or canted In the direction of the arrow i about, an axis defined by the other actuating member 51b, while the spring 38 yieldably resists such turning or canting of the coupling member. In response to the turning or canting or the coupling member 37 in the direction of the arrow i in Figure 5B, the pivot arm 42 is turned in the direction of the arrow i around the pivot pin 41 by reason of the force exerted in the direction of the arrow i by the end portion 49a' of the resilient arm 49a against the pin or post 43. When the slide member 24 is locked or latched in its operative position by the latch plate 39, as hereinafter described in detail, the FR gear 11 meshes with the intermediate gear 6 in response to the movement of the idler 8 in the direction of the arrow y in Figure 1 for establishing the fast-forward mode, as previously described. The meshing of the FR gear 11 with the intermediate gear 6 is controlled by the engagement of the projection 45 on the pivot arm 42 with a limiting surface 57b of the chassis plate 56, as shown in Figure 3B. At such time, the resilient arm 49a of the coupling member 37 is flexed slightly in the direction of the arrow i' in Figure 5B so that a continuous resilient force is applied to the pivot arm 42 for holding the pivot arm 42 in the position shown in Figure 3B, that is, in the position for the fast-forward mode of the apparatus.

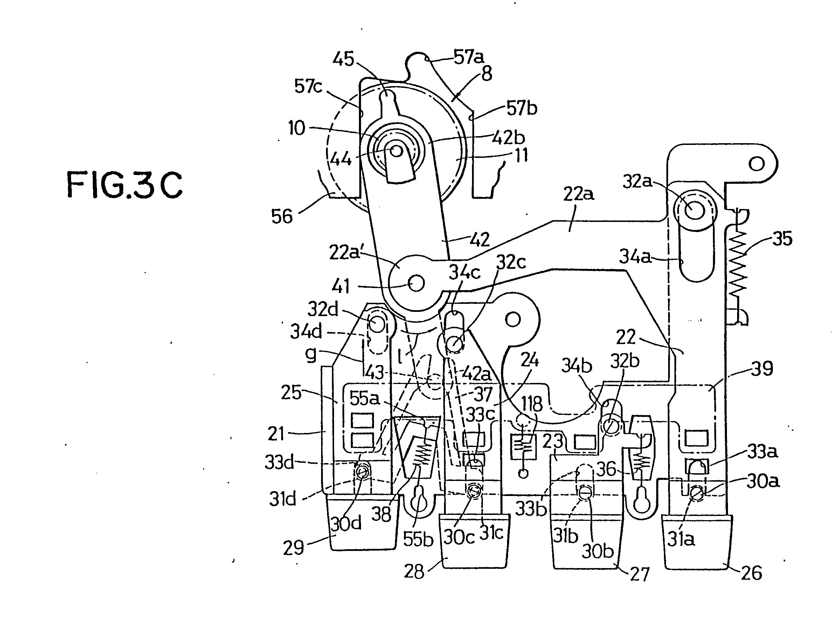

Referring now to Figures 3C and 5C, it will be seen that, when the slide member 25 is moved in the direction of the arrow g to its operative position for selecting the rewind mode of the apparatus, the actuating member 51b on the slide member 25 pushes the receptacle 50b of the coupling member 37 in the direction of the arrow g so that the coupling member 37 is turned or canted in the direction of the arrow k about an axis, defined by the actuating member 51a, while the spring 38 yieldably resists such turning or canting of the coupling member 37. In response to turning of the coupling member 37 in the direction of the arrow k, the pivot arm 42 is turned in the direction of the arrow l around the pivot pin 41 due to the action of the end portion 49b' of the resilient arm 49b against the pin or post 43 in the direction of the arrow k. The turning of the pivot arm 42 in the direction of the arrow l moves the idler 8 in the direction of the arrow Z in Figure 1 so that the FR gear 11 meshes with the intermediate gear 7 and thereby establishes the rewind mode of the apparatus, as previously described. At the completion of the turning of the pivot arm 42 in the direction of the arrow l in Figure 3C, the end portion 42b of the pivot arm 42 engages against a stop surface 57c of the chassis plate 56 with the resilient arm 49b of the coupling member 37 being then flexed in the direction of the arrow k'. Thus, the resilient arm 49b exerts a continuous resilient force for holding the end portion 42b against the stop surface 57c and thereby stabilizing the engagement of the FR gear 11 with the intermediate gear 7 in the rewind mode.

When the push-button 27 is depressed in the direction of the arrow g against the force of the spring 36 while the apparatus is in its play, fast forward or rewind mode, the latch plate 39 is released, as hereinafter described in detail, so that the slide member 23, 24 or 25 can be returned to its inoperative position for restoring the apparatus to its stop mode, as illustrated in Figure 2.

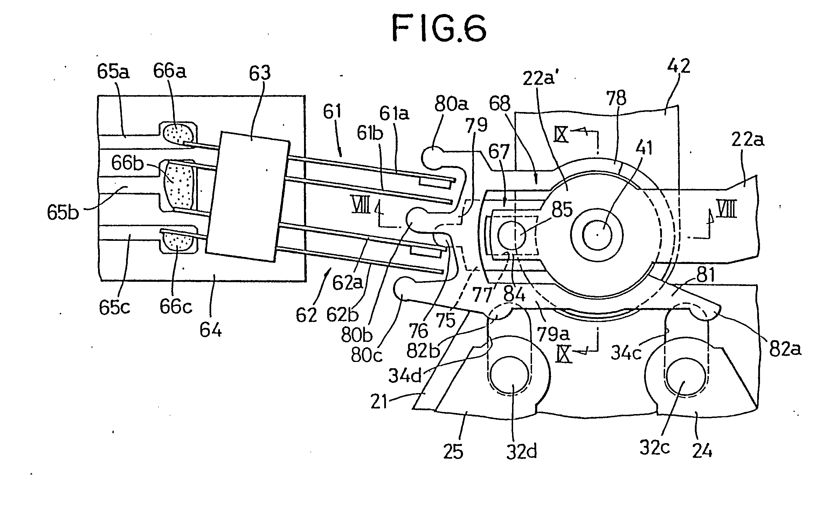

It is desirable that the speed with which the tape is transferred between the take-up and supply reels of the cassette in the fast-forward and rewind modes be very substantially greater than the normal tape speed for recording and/or reproducing, that is, greater than the normal tape speed by an amount larger than that caused by the difference in gear ratios when the FWD gear 10 meshes with the outer gear 3 and when the FR gear 11 meshes with the intermediate gear 6 or 7, respectively. In order to achieve the foregoing, the motor 12 is desirably operable at a normal speed in the play mode of the apparatus and at a high speed in the fast-forward and rewind modes. Referring now to Figure 6, it will be seen that, in order to achieve such normal and high speed operations of the motor 12, the apparatus further comprises a first switch 61 having a pair of normally spaced apart contact leaves 61a and 61b which are brought together for actuating or closing the respective switch 61 and thereby supplying power to the motor 12, and a second switch 62 also having a pair of normally spaced apart contact leaves 62a and 62b which can be brought together for actuating or closing the respective switch 62 and thereby changing or increasing the operating speed of the motor 12. As shown, the switches 61 and 62 are arranged with the respective pairs of contact leaves spaced apart and normally extending parallel to each other from a common insulator block 63 fixed on a printed circuit board 64 which is suitably mounted adjacent to the pivot pin 41. The ends of the contact leaves 61a and 61b, and 62a and 62b adjacent to the insulator block 63 are electrically connected to printed patterns 65a, 65b and 65c on the board 64 by solder 66a, 66b and 66c. The arrangement of the printed circuit on the board 64 for controlling the motor 12 is such that, when only the switch 61 is closed or actuated, the motor 12 is operated at its normal speed whereas, when the switches 61 and 62 are both simultaneously closed or actuated, the motor 12 is operated at its high speed.

In order to provide for such selective actuation or closing of the switches 61 and 62, the free end portions of the respective contact leaves are arranged alongside the path of travel of the pivot pin 41 with the arm 22a of the play mode selecting slide member 22, and first and second switch actuating members 67 and 68 moulded or otherwise formed of synthetic resin are mounted about the pivot pin 41 so as to turn about it and participate in the translational movements of the pivot arm 42.

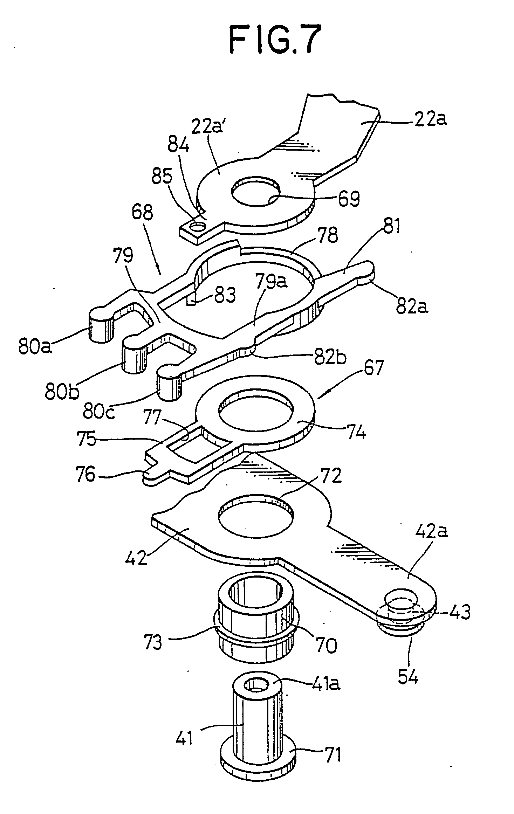

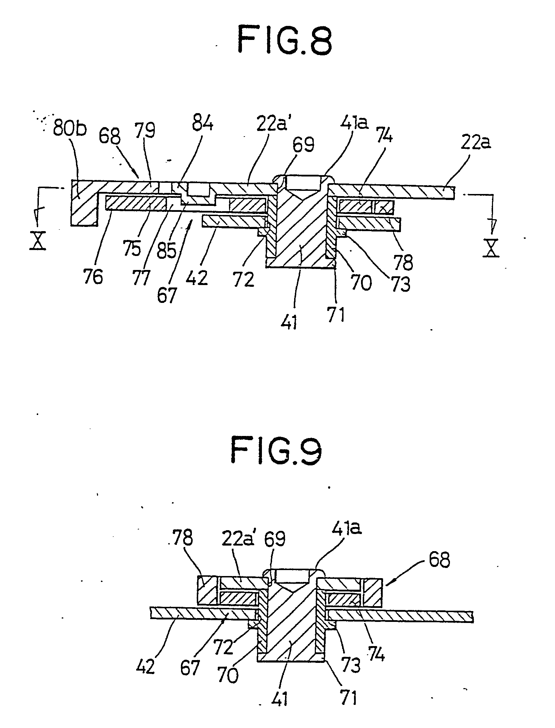

As shown particularly in Figures 7, 8 and 9, a sleeve 70 extends around the pivot pin 41 and rests on a flange 71 at the lower end of the pivot pin 41. The upper end portion 41a of the pivot pin 41 extends above the sleeve 70 through a hole 69 in the end portion 22a' of the arm 22a, and the upper end 41a of the pivot pin 41 is swaged above the arm 22a (Figures 8 and 9) for securing the pin 41 to the arm 22a. A hole 72 is provided in the pivot arm 42 intermediate the ends of the pivot arm 42 and extends turnably about the sleeve 70 above an annular rim 73 on the sleeve 70. The switch actuating member 67 includes a ring portion 74 which extends around the sleeve 70 above the pivot arm 42, and an arm portion 75 extending radially from the ring portion 74 and terminating in a projection 76. Moreover, the arm portion 75 has an approximately rectangular aperture 77 therein. The other or second switch actuating member 68 includes a C-shaped arcuate portion 78 dimensioned to extend closely around the ring portion 74 and defining a gap between ends 83 of the C-shaped portion 78 through which the arm portion 75 can loosely extend. Parallel arms 79a and 79b extend from the ends of the C-shaped portion 78 to a bridging portion 79 from which three spaced apart fingers or projections 80a, 80b and 80c extend outwardly and downwardly. A tail portion 81 extends from the C-shaped portion 78 in the direction opposed to the arm 79a, and convex nodes 82a and 82b are formed at the outer sides of the tail portion 81 and the arm 79a at approximately equal distances from the centre of the C-shaped portion 78.

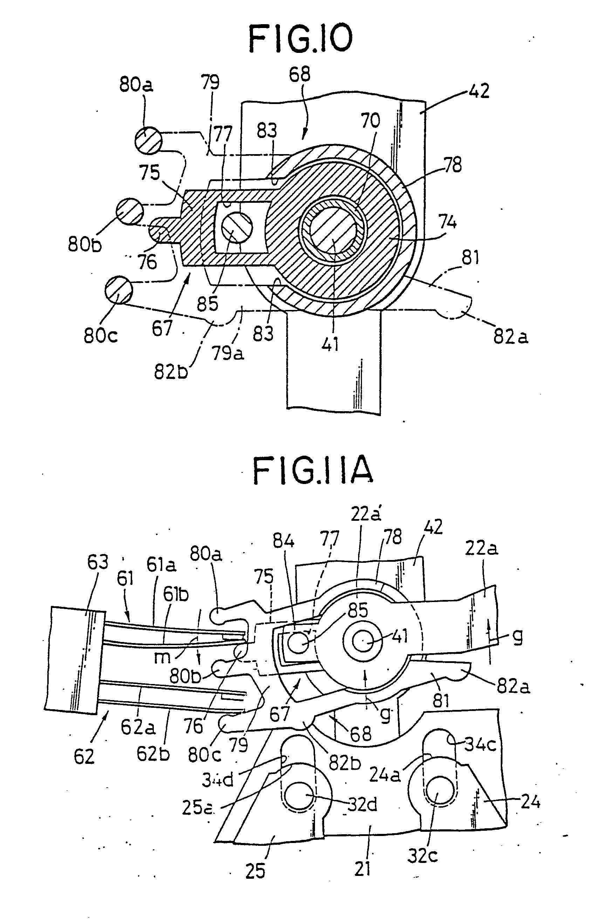

The maximum height of the C-shaped portion 78 of the actuating member 68 is shown to be approximately equal to the combined thicknesses of the ring-shaped portions 22a' and 74 of the arm 22a and the actuating member 67, respectively, and the C-shaped portion 78 is shown to have a cut-out in its upper edge at the side of the C-shaped portion 78 opposed to the gap between its ends 83. Thus, the arm 22a can extend through the cutout in the upper edge of the C-shaped portion 78 while the ring-shaped end portion 22a' of the arm 22a sits within the C-shaped portion 78 above the ring portion 74. It is also to be seen that the arms 79a and 79b are spaced upwardly from the bottom edge of the C.shaped portion 78 at the ends 83 of the C-shaped portion 78. Thus, the arm portion 75 can extend under the arms 79a and 79b to avoid limiting the turning of the actuating member 67. On the other hand, the turning of the actuating member 67 relative to the arm 22a is limited by an embossed projection 85 depending from an extension 84 of the end portion 22a' and being received in the aperture 77 of the arm portion 75 (Figures 8 and 10). Since the bridging portion 79 of the actuating member 68 lies above the outer part of the arm portion 75 of the actuating member 67 (Figure 8) the central finger or projection 80b depending from the actuating member 68, and the projection 76 of the actuating member 67 are approximately in confronting relation.

As shown particularly in Figure 6, the pair of contact leaves 61a and 61b extend between the projections 80a and 80b of the actuating member 68, while the other pair of contact leaves 62a and 62b extend between the projections 80b and 80c. Thus, the projection 80b extends between the contact leaf 61b of the switch 61 and the contact leaf 62a of the switch 62, and the projection 76 of the actuating member 67 similarly extends between the contact leaves 61b and 62a.

In the stop mode of the apparatus illustrated in Figure 6, the contact leaves 61a and 61b of the switch 61 and the contact leaves 62a and 62b of the switch 62 extend loosely between the projections 80a and 80b and between the projections 80b and 80c, respectively, and the projection 76 extends loosely between the contact leaves 61b and 62a so that both the switches 61 and 62 remain in their normal open conditions and the motor 12 is inoperative.

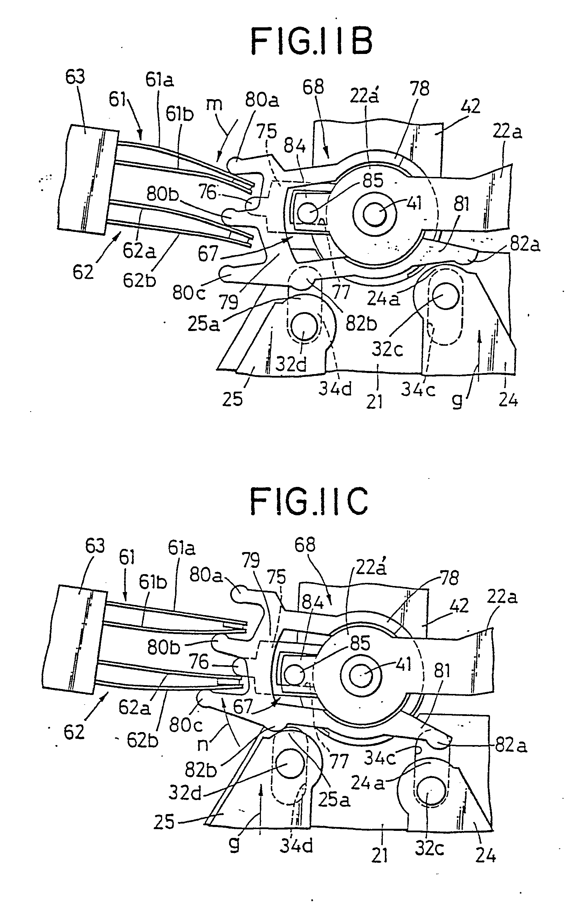

In the playback mode of the apparatus illustrated in Figure 11A, In response to the movement of the play mode selecting slide member 22 in the direction of the arrow g, the actuating member 67 is bodily moved in the direction q with arm 22a and the engagement of the embossed projection 85 in the aperture 77 limits the turning of the actuating member 67 relative to the arm 22a in the direction of the arrow m. Thus, the projection 76 flexes the contact leaf 61b towards the contact leaf 61a for closing or actuating the switch 61 and thereby causing operation of the motor 12. During the movement of the arm 22a in the direction of the arrow g for establishing the play mode of the apparatus, the switch actuating member 68 is free to turn substantially in the direction of the arrow m so that, as shown in Figure 11A the switch 62 remains in its opened condition. Thus, as desired, the motor 12 is operated at its normal speed in the play mode of the apparatus in the fast-forward mode of the apparatus illustrated in Figure 11B, in response to the movement of the fast-forward mode selecting slide member 24 in the direction of the arrow g to its operative position, the rounded back end 24a of the slide member 24 acts against the node 82a on the tail portion 81 of the switch actuating member 68 for turning it in the direction of the arrow m about the pivot pin 41. Such turning of the switch actuating member 68 while the arm 22a is at rest causes the projections 80a and 80b to act against and flex the contact leaves 61a and 62a for engaging the flexed contact leaves against the contact leaves 61b and 62b, respectively, Thus, both the switches 61 and 62 are actuated or closed to effect operation of the motor 12 at the increased or high speed, as is desired for the fast, forward mode of operation.

In the rewind mode of the apparatus, as shown in Figure 11C, in response to the movement of the rewind mode selecting slide member 25 in the direction of the arrow g to its operative position, the rounded back end 25a of the slide member 25 acts against the node 82b on the switch actuating member 68 so as to turn it about the pivot pin 41 in the direction of the arrow n. Such turning of the actuating member 68 causes the projections 80b and 80c to act against and flex the contact leaves 61b and 62b, respectively, so that the switches 61 and 62 are both actuated or closed for again causing operation of the motor 12 at its high or increased speed.

It will be appreciated that, in the above described arrangement for controlling the operations of the motor 12, the two switches 61 and 62 for controlling the supply of power to the motor 12 and for increasing the motor speed in the fast-forward and rewind modes can be disposed in close proximity to each other, and thus can be simultaneously assembled by the attachment of a common insulator 63 to the printed circuit board 64. Moreover, as described, the closely disposed switches 61 and 62 can be simultaneously actuated or closed for the fast-forward or rewind mode of the apparatus merely by turning of the switch actuating member 68 in the direction of the arrow m or n, respectively.

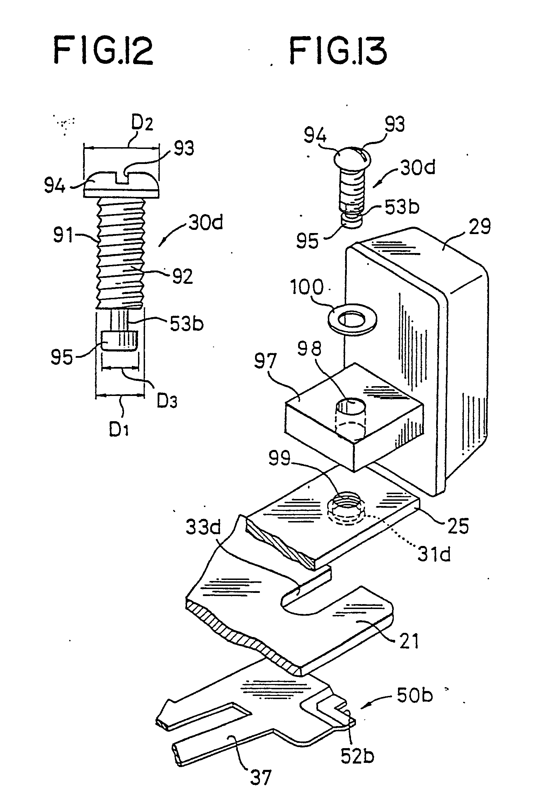

Referring now to Figure 12, it will be seen that the screw 30d for attaching the push-button 29 to the rewind mode selecting slide member 25 (and similarly the screw 30c for connecting the push-button 28 to the fast forward mode selecting slide member 24) includes a body 92 having a helical thread 91 extending along its length, a head 94 with a diameter $D_2$ larger than the diameter $D_1$ of the threaded body 92 and having a slot 93 for receiving a screwdriver, and a post 95 extending axially from the lower end of the body portion 92 and having a diameter $D_3$ smaller than the diameter $D_1$. Further, the respective groove 53b is provided between the post 95 and the adjacent end of the threaded body 92.

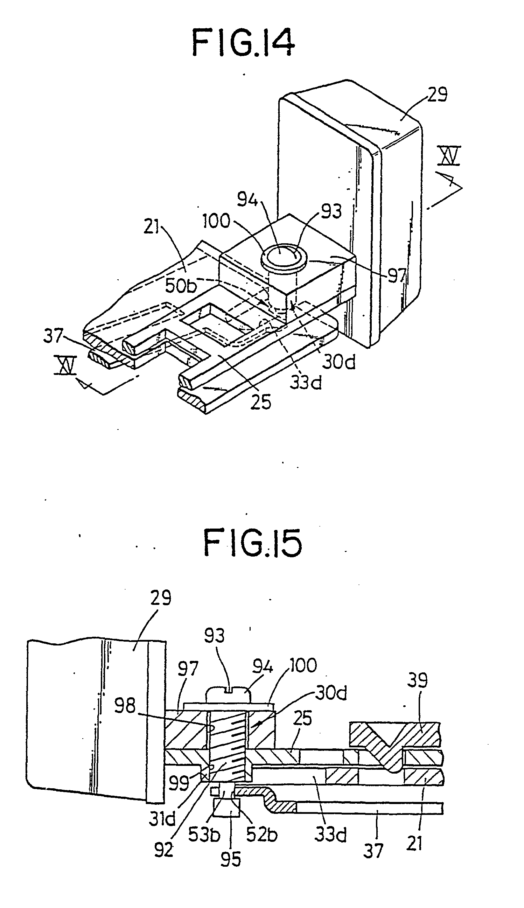

As shown in Figures 13, 14 and 15, the push-button 29 for selecting the rewind mode is preferably moulded from a synthetic resin so as to have a lug 97 extending integrally therefrom and formed with a through hole 98 having a diameter larger than the outer diameter $D_1$ of the thread 91 on the body portion 92. On the other hand, the respective collar 31d depending from the slide member 25 has an internal thread 99 for engagement by the thread 91 of the body portion 92. In assembling the push-button 29 with the slide member 25, the screw member 30d is extended through a washer 100 and hole 98 in the lug 97, and then the threaded body portion 92 is threadably engaged with the internal threads 99 of the collar 31d. Upon tightening of the screw 30d, its lower portion or post 95 extends below the collar 31d which is slidably guided in the slot 33d of the sub-chassis 21 while the notched boss 52b of the coupling member 37 is received in the groove 53b. Thus, the screw 30d functions both to secure the push-button 29 to the slide member 25 and also as the actuating member 51b. The screw 30c similarly operates both to secure the push-button 28 to the slide member 24 and also to define the actuating member 51a.

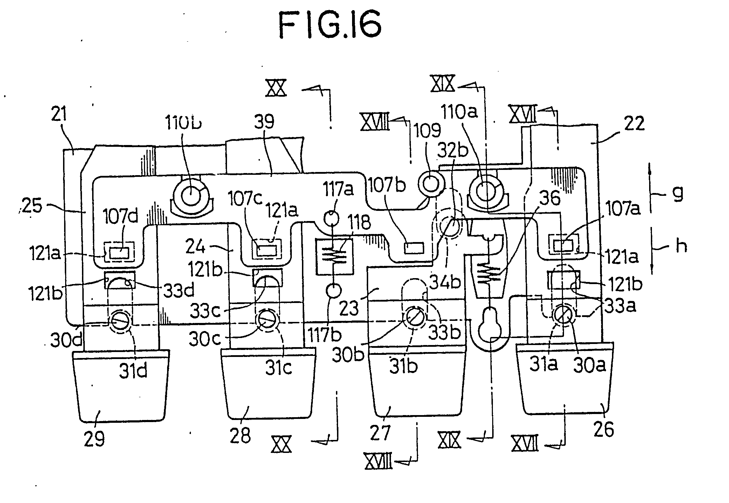

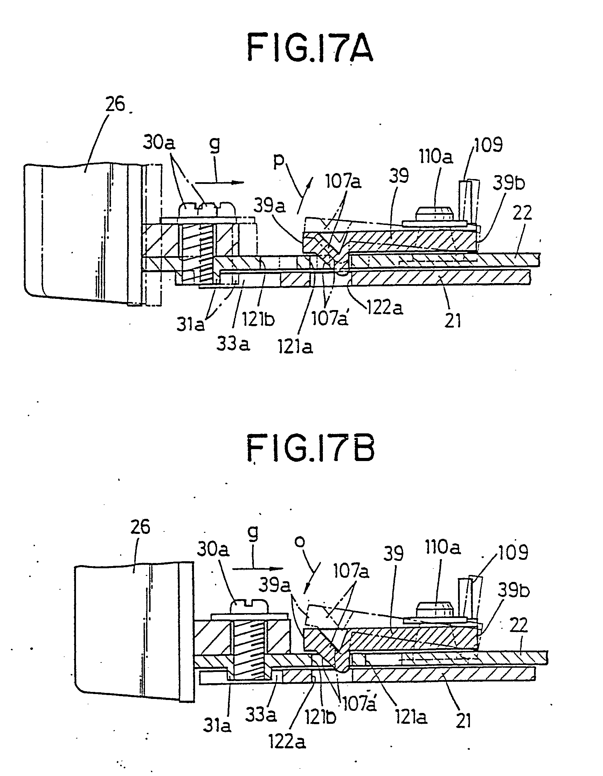

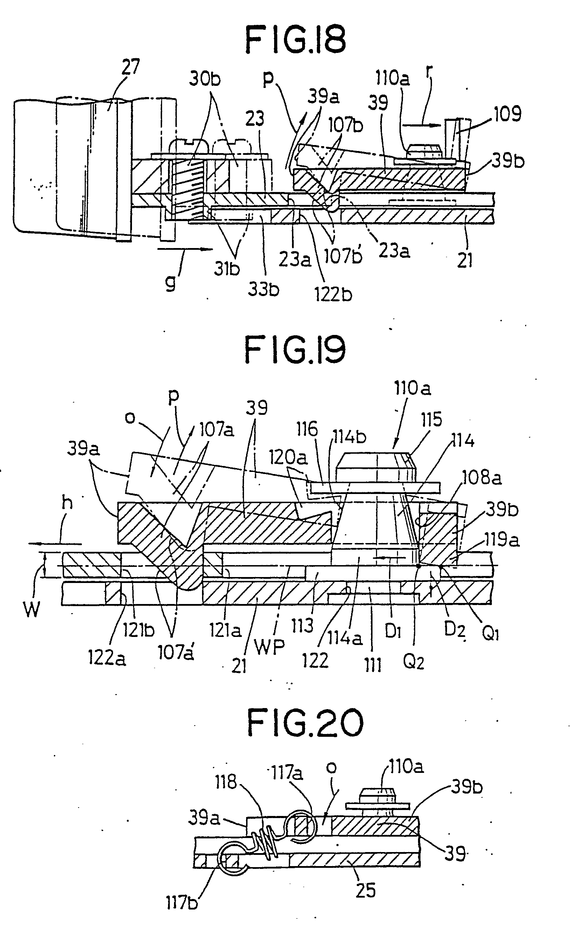

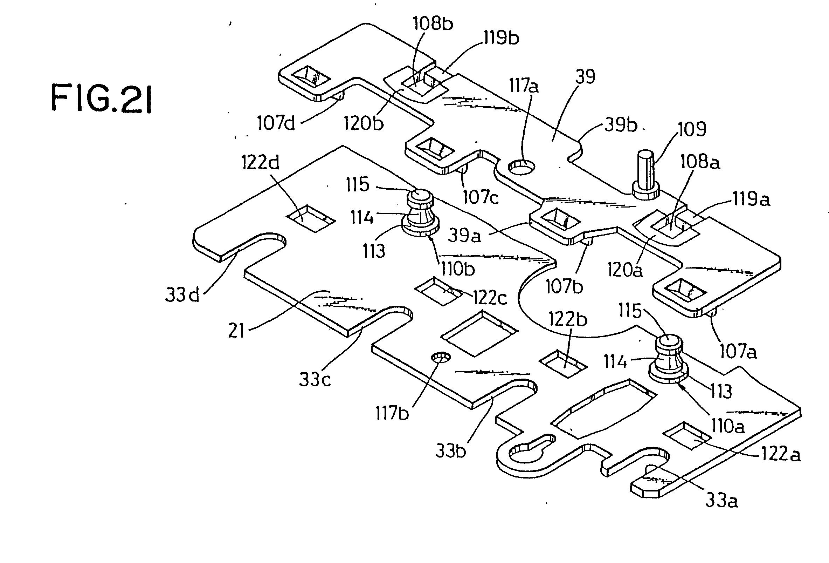

A latch mechanism which includes the latch plate 39 for selectively locking any one of mode selecting slide members 22, 24 and 25 in its operative position, and for releasing the locked slide member in response to the movement of the slide member 23 to its operative position, will now be described in detail with reference to Figures 16 to 21. As previously noted, the slide members 22 to 25 are slidably mounted for movements parallel to each other in the directions of the arrows g and h on the sub-chassis 21. The latch plate 39 extends over the substantially co-planar slide members 22 to 25 and, as shown particularly in Figure 21, is preferably formed of a pressed sheet metal. The forward portion 39a of the latch plate 39 is formed with four depending embossed latch noses 107a, 107b 107c and 107d spaced apart laterally so as to be positioned over the slide members 22 to 25, respectively. Each of the latch noses 107a to 107d has a right-triangular cross-section, with its sloping surface, as at 107a' in Figures 17A, 17B and 19, or as at 107b' in Figure 18, facing forwardly, that is, in the direction towards the respective push-button. In the rear portion 39b of the latch plate 39, the latch plate 39 is formed with a pair of laterally spaced apart square holes 108a and 108b and also with an upstanding pin 109 (Figure 21). The pin 109 may be engageable by an auto shut-off mechanism, which forms no part of the present invention. It is sufficient merely to note that such auto shut-off mechanism is operative, for example, when the tape is completely wound from the supply reel onto the take-up reel with the apparatus in its play mode, to act on the pin 109 for rocking the latch plate 39 to its inactive position, and thereby to permit return of the apparatus to its stop mode. As shown in Figure 21, a pair of pivot pins 110a and 110b extend upwardly from the sub-chassis 21 at laterally spaced locations aligned with the holes 108a and 108b. As shown particularly in Figure 19, each of the pivot pins 110a and 110b has a lower end portion 111 secured in a respective hole 112 in the sub-chassis 21. An enlarged pedestal portion 113 is immediately adjacent to the end portion 112 and bears on the upper surface of the sub-chassis 21. Moreover, each of the pivot pins 110a and 110b has a cylindrical base portion 114a intermediate between the pedestal portion 113 and an upwardly tapering body portion 114 having a head 115 at its upper end. After the pivot pins 110a and 110b have been inserted upwardly in the square holes 108a and 108b, respectively, nylon washers 116 are mounted on the tapering body portions 114 immediately below the heads 115 for preventing the removal of the latch plate 39 from the pivot pins 108a and 108b. As shown particularly in Figures 16 and 20, a tension spring 118 extends between a hole 117a in the forward portion 39a of the latch plate and a hole 117b in the sub-chassis 21 so that the latch plate 39 is urged to rock about the pivot pins 110a and 110b in the direction of the arrow o, (Figure 20). Since the spring 118 is inclined downwardly in the forward direction, as shown in Figure 20, the force of the spring 118 has two components at right angles, that is, a component in the direction of the arrow $D_1$ in Figure 19, and another component in the direction of the arrow $D_2$. As shown particularly in Figure 21, the latch plate 39 is downwardly embossed or offset from the holes 108a and 108b to define depending lugs 119a and 119b. By reason of the direction in which the force of the spring 118 acts on the latch plate 39, the spring force in the direction of the arrow $D_1$ urges the lugs 119a and 119b against the cylindrical base portions 114a of the pivot pins 110a and 110b, respectively, while the component of the spring force in the direction of the arrow $D_2$ urges the lugs 119a and 119b downwardly upon the pedestal portions 113 and the respective pivot pins 110a and 110b. Generally U-shaped recesses 120a and 120b are formed in the upper surface of the latch plate 39 at the sides and front of the holes 108a and 108b for accommodating washers 116 when the latch plate 39 is rocked from its active position shown in full lines in Figure 19 to its inactive or raised position shown in dot-dash lines.

As shown in Figures 16, 17A and 17B, each of the mode selecting slide members 22, 24 and 25 is formed with a pair of keeper holes 121a and 121b spaced apart along the respective slide member 22, 24 or 25, and being laterally located for alignment with the latch noses 107a, 107c and 107d, respectively. It will be seen that the slide member 23 for selecting the stop mode of the apparatus does not have any hole corresponding to the previously described holes or keepers 121a and 121b. Further, and as particularly shown in Figure 21, the sub-chassis 21 has four laterally spaced apart holes 122a, 122b, 122c and 122d which register with the latch noses 107a, 107b, 107c and 107d to avoid interference with the full movement of the latch plate 39 to its active position.

In the stop mode of the apparatus shown in Figure 16 and in full lines in Figure 17A, the slide members 22 to 25 are all urged in the direction of the arrow h by springs 35, 36 and 38. The slide members 22, 24 and 25 are, disposed in their inoperative positions in which the noses 107a, 107b and 107d engage in the respective rearward holes 121a, while the slide member 23 is also disposed in its inoperative position in which its rearward edge 23a confronts the inclined surface 107b' of the latching nose 107b.

When the push-button 26 is depressed for moving the associated slide member 22 in the direction of the arrow g from its inoperative position towards its operative position for selecting the play mode of the apparatus, during the initial movement of the push-button 26, for example, to the position shown in dot-dash lines in Figure 17A, the forward edge of the hole 121a engages against the inclined surface 107a' of the latch nose 107a so that the latch plate 39 is rocked upwardly in the direction of the arrow p against the force of the spring 118. As the movement of the slide member 22 towards its operative position continues, the latch nose 107a is lifted out of the hole 121a in the slide member 22 by the progressive pivoting of the latch plate 39 in the direction of the arrow p around the pivot point $Q_1$ where each of the lugs 119a and 119b contacts the edge of the pedestal portion 113 of the respective pivot pin 110a or 110b (Figure 19). As indicated by the dot-dash lines in Figure 19, in response to such pivoting of the latch plate 39, the inner wall surfaces of the square holes 108a and 108b move upwardly along the frusto-conical surfaces 114b of the tapering body portions 114, while the nylon washers 116 are received in recesses 120a and 120b to prevent the removal of the latch plate 39 from the pivot pins 110a and 110b. When the slide member 22 attains its operative position (Figure 17b) for establishing the play mode of the apparatus, the latch plate 39 is rocked in the direction of the arrow o by the force of the spring 118 so that the latch nose 107a engages in the hole 121b of the slide member 22 for locking the slide member 22 in its operative position.

With the play mode selecting slide member 22 being thus latched or locked in its operative position, the depending lugs 119a and 119b on the latch plate 39 are urged into contact with the cylindrical base portions 114a of the pins 110a and 110b by the component of the spring force acting in the direction of the arrow $D_1$, and the lower corners of the lugs 119a and 119b are held at the points indicated at Q2 by the component of the spring force in the direction of the arrow $D_2$ (Figure 19). it will be appreciated that the force of the spring 35 urging the slide member 22 to return in the direction of the arrow h in Figure 19 to the inoperative position is resisted at the right-angled surface of the nose 107a engaging the back edge surface of the hole 121b. if the point $Q_1$ which is effective as the pivot axis for rocking of the latch plate 39 were positioned above the slide member 22, the reaction to the force of the spring 35, that is, the force of the back edge surface of the hole 121b against the right-angled surface of the latch nose 107a, would give rise to a torque tending to pivot the latch plate 39 in the direction of the arrow p, that is, towards its inactive position. However, in the described arrangement of the latch plate 39, the point $Q_1$ defining the pivot axis for the latch plate 39 is positioned at the centre WP of the width W of the slide member 22, that is, in line with the centre of the surface at which the slide member 22 acts against the right angled surface of the nose 107a. Thus, the reaction to the force of the spring 35 does not generate a force in the direction of the arrow p so that accidental release of the latch plate 39 due to vibration is not likely to occur.

When the push-button 27 is depressed in the direction of the arrow g at a time when the apparatus is in its playback mode, the back end edge 23a of the slide member 23 pushes against the inclined surface 107b' of the latch nose 107b, so that the latch plate 39 is rocked upwardly from its active position in the direction of the arrow p against the force of the spring 118, for example, to the position shown in dot-dash lines in Figure 18. In response to such rocking of the latch plate 39, the latch nose 107a of the latch plate 39 is lifted from the hole 121b in the slide member 22, whereupon the slide member 22 is free to be returned to its inoperative position by the force of the spring 35, as shown in Figures 2 and 16. As earlier noted, upon the full unwinding of the tape within a cassette, an auto shut-off mechanism (not shown) may push the pin 109 in the direction of the arrow r in Figure 18 so as to pivot the latch plate 39 in the direction of the, arrow p, thereby again to release the slide member 22 for return to its inoperative position, that is, for restoration of the stop mode of the apparatus.

Although the operation of the illustrated latch mechanism has been specifically described with reference to the locking of the slide member 22 in its operative position for maintaining a play mode of the apparatus, and then for the release of the slide member 22 from its operative position so as to restore the stop mode of the apparatus in response to actuation of the stop push-button 27, it will be apparent that the operation of the latch mechanism is similar in respect of the slide members 24 and 25 provided for respectively selecting the fast-forward and rewind modes of the apparatus.

It will further be seen that, in the described latch mechanism, the latch plate 39 is assembled on the sub-chassis 21 merely by movement of the latch plate 39 downwardly over the slide members 22 to 25 in a direction perpendicular to the sub-chassis 21 so as to insert the pivot pins 110a and 110b into the corresponding holes 108a and 108b. Thus, the parts assembled on the sub-chassis 21 are successively applied thereto in one direction, that is, downwardly from above. Further, the pivot pins 110a and 110b and the holes 108a and 108b for providing the pivotal mounting of the latch plate 39 are easily formed on the sub-chassis 21 and the latch plate 39, respectively.

## Claims

1. A cassette tape recording and/or reproducing apparatus having tape drive means including a transmission member (8) which is shiftable for changing the operation mode of said tape drive means, includes a mode changing mechanism comprising:

a chassis (21);

first and second mode selecting slide members (24,25) mounted on said chassis (21) for movements relative to said chassis (21) independently of each other along substantially parallel paths between respective operative and inoperative positions;

a pivot arm member (42) carrying a post (43) and said transmission member (8) of the tape drive means and being movable for shifting said transmission member (8);

a coupling member (37) straddling said first and second slide members (24,25) and engageable with said post (43) on said pivot arm member (42), and also engageable with first and second actuating members (51a,51b) on said first and second slide members (24,25), respectively, at first and second locations, respectively, spaced apart in a direction transverse to said parallel paths of movement of said slide members (24,25); and

a tension spring (38) connected between said chassis (21) and said coupling member (37) and acting on said coupling member (37) at a position intermediate between said first and second locations and in·a direction transverse to the line connecting said first and second locations for simultaneously urging said coupling member (37) against said first and second actuating members (51a,51b) and thereby urging both of said first and second slide members (24,25) to said inoperative positions thereof;

wherein the movement of a selected one of said slide members (24,25) to its operative position is effective to turn said coupling member (37) about the actuating member (51a,51b) on the other of said slide members (24,25) and thereby effect movement of said pivot arm member (42) via said post (43) and shifting of said transmission member (8) for establishing a corresponding mode of said tape drive means.

2 Apparatus according to claim 1 further comprising means (41) mounting said pivot arm member (42) for swinging about a pivot axis in first and second directions in response to turning of said coupling member (37) about said first and second actuating members (51a,51b), respectively, wherein said pivot axis is located intermediate between ends of said pivot arm member (42), said transmission member (8) is mounted adjacent to one of said ends of said pivot arm member (42), and said post (43) is mounted adjacent to the other of said ends thereof, and wherein said coupling member (37) includes a pair of resilient arms (49a,49b) between which said post (43) is engageable for causing said swinging of said pivot arm member (42) in said first and second directions about said pivot axis.

3 Apparatus according to claim 2 wherein said resilient arms (49a,49b) define a path therebetween along which said post (43) is guided during said movement of said pivot arm member (42).

4 Apparatus according to claim 2 further comprising a third mode selecting slide member (22) mounted on said chassis (21) for movements relative to said chassis (21) between operative and inoperative positions along a path substantially parallel to said paths of movement of said first and second slide members (24,25), and spring means (35) urging said third slide member (22) towards said inoperative position thereof, wherein said pivot axis for the pivot arm member (42) is disposed on said third slide member (22) for movement of said pivot arm member (42) in said third direction in response to movement of said third slide member (22) to said operative position thereof.

**Patentansprüche**

1. Aufzeichnungs- und/oder Wiedergabegerät für Bandkassetten mit Bandantriebsmitteln, die ein Übertragungsglied (8) enthalten, das zur Änderung der Betriebsart der Bandantriebsmittel verschiebbar ist, sowie mit einem Mechanismus zur Änderung der Betriebsart mit folgenden Teilen:

einem Chassis (21),

einem ersten und einem zweiten Gleitkörper (24, 25) zur Auswahl der Betriebsart, die derart auf dem Chassis (21) montiert sind, daß sie relativ zu diesem unabhängig voneinander auf im wesentlichen parallelen Bahnen jeweils zwischen einer Arbeits- und einer Ruhestellung bewegbar sind,

einem Schwenkarmglied (42), das einen Stift (43) sowie das genannte Übertragungsglied (8) der Bandantriebsmittel trägt und das bewegbar ist, um eine Verschiebung des Übertragungsglieds (8) herbeizuführen,

einem Kupplungsglied (37), das den ersten und den zweiten Gleitkörper (24, 25) übergreift und mit dem genannten Stift (43) an dem Schwenkarmglied (42) sowie mit dem ersten bzw. zweiten Gleitkörper (24, 25) an einer ersten bzw. zweiten Stelle in Eingriff gebracht werden kann, die in einer Richtung quer zu den genannten parallelen Bewegungsbahnen der Gleitkörper (24, 25) im Abstand voneinander angeordnet sind,

und einer zwischen dem Chassis (21) und dem Kupplungsglied (37) angeordneten Spannfeder (38), die an einer zwischen der ersten und der zweiten Stelle liegenden Zwischenposition in einer quer zu der die erste und die zweite Stelle miteinander verbindenden Linie verlaufenden Richtung an dem Chassis (21) angreift, um das Kupplungsglied (37) gleichzeitig gegen das erste und das zweite Betätigungsglied (51a, 51b) und damit den ersten und den zweiten Gleitkörper (24, 25) in ihre Ruhestellungen vorzuspannen,

wobei durch die Bewegung eines ausgewählten Gleitkörpers (24, 25) in seine Arbeitsstellung das Kupplungsglied (37) um das Betätigungsglied (51a, 51b) auf dem anderen Gleitkörper (24, 25) gedreht und dadurch über den Stift (43) das Schwenkarmglied (42) bewegt und das Übertragungsglied (8) derart verschoben wird, daß die entsprechende Betriebsart der Bandantriebsmittel eingestellt wird.

2. Gerät nach Anspruch 1, bei dem ferner Mittel (41) vorgesehen sind, mit deren Hilfe das Schwenkarmglied (42) so montiert ist, daß es in Abhängigkeit von der Drehung des Kupplungsglieds (37) um das erste bzw. zweite Betätigungsglied (51a, 51b) in einer ersten bzw. zweiten Richtung um eine Schwenkachse schwingt, die etwa in der Mitte zwischen den Enden des Schwenkarmglieds (42) liegt, wobei das Übertragungsglied (8) in der Nähe eines Endbereichs des Schwenkarmglieds (42) und der Stift (43) in der Nähe des anderen Endbereichs des Schwenkarmglieds (42) montiert ist, und wobei das Kupplungsglied (37) zwei federnde Arme (49a, 49b) aufweist, zwischen die der Stift (43) eingreifen kann, um das Schwenkarmglied (42) in der ersten und zweiten Richtung um die Schwenkachse zu verschwenken.

3. Gerät nach Anspruch 2, bei dem die federnden Arme (49a, 49b) zwischen sich eine Bahn begrenzen, in der der Stift (43) während der Bewegung des Schwenkarmglieds (42) geführt ist.

4. Gerät nach Anspruch 2 mit einem weiterem Gleitkörper (22) für die Auswahl einer dritten Betriebsart, der so an dem Schwenkarmglied (21) montiert ist, daß er längs einer im wesentlichen parallel zu den Bewegungsbahnen des ersten und zweiten Gleitkörpers (24, 25) verlaufenden Bewegungsbahn zwischen einer Arbeitsstellung und einer Ruhestellung bewegbar ist, wobei er durch

EP 0 133 045 B1

federnde Mittel (35) in Richtung auf seine Ruhestellung vorgespannt ist, und wobei der Schwenkzapfen des Schwenkarmglieds (42) an dem dritten Gleitkörper (22) angeordnet ist, um das Schwenkarmglied (42) in die genannte dritte Richtung zu bewegen, wenn der dritte Gleitkörper (22) in seine Arbeitsstellung bewegt wird.

**Revendications**

1. Appareil d'enregistrement et/ou de lecture de bande en cassette ayant un dispositif d'entraînement de bande qui comprend un organe de transmission (8) qui peut être déplacé afin qu'il change le mode de fonctionnement du dispositif d'entraînement de bande, comprenant un mécanisme de changement de mode qui comporte:

un châssis (21),

un premier et un second coulisseau de sélection de mode (24, 25) montés sur le châssis (21) afin qu'ils se déplacent par rapport au châssis (21) indépendamment l'un de l'autre le long de trajets sensiblement parallèles entre des positions respectives de travail et de repos,

un organe à bras pivotant (42) portant un plot (43) et l'organe de transmission (8) du dispositif d'entraînement de bande, et mobile afin qu'il provoque un déplacement de l'organe de transmission (8),

un organe d'accouplement (37) chevauchant le premier et le second coulisseau (24, 25) et destiné à coopérer avec le plot (43) monté sur l'organe à bras pivotant (42), et destiné aussi à être au contact d'un premier et d'un second organe de manoeuvre (51a, 51b) montés sur le premier et le second coulisseau (24, 25) respectivement, à un premier et un second emplacement respectifs, ces emplacements étant distants en direction transversale aux trajets parallèles de déplacement des coulisseaux (24, 25), et

un ressort de traction (38) raccordé entre le châssis (21) et l'organe d'accouplement (37) et agissant sur l'organe d'accouplement (37) à un emplacement compris entre le premier et le second emplacement et en direction transversale à la droite reliant le premier et le second emplacement afin qu'il rappelle simultanément l'organe d'accouplement (37) contre le premier et le second organe de manoeuvre (51a, 51b) et rap-

pelle ainsi à la fois le premier et le second coulisseau (24, 25) vers leur position de repos, si bien que le déplacement d'un coulisseau choisi (24, 25) vers sa position de travail assure la rotation de l'organe d'accouplement (37) autour de l'organe de manoeuvre (51a, 51b) de l'autre coulisseau (24, 25) et assure ainsi le déplacement de l'organe à bras pivotant (42) par l'intermédiaire du plot (43), et le déplacement de l'organe de transmission (8) qui établit un mode correspondant du dispositif d'entraînement de bande.

2. Appareil selon la revendication 1, comprenant en outre un dispositif (41) de montage de l'organe à bras pivotant (42) afin qu'il pivote autour d'un axe de pivotement dans une première et une seconde direction à la suite de la rotation de l'organe d'accouplement (37) autour du premier et du second organe de manoeuvre (51a, 51b) respectivement, l'axe de pivotement étant placé entre les extrémités de l'organe à bras pivotant (42), l'organe de transmission (8) étant monté près d'une première des extrémités de l'organe à bras pivotant (42), et le plot (43) étant monté près de l'autre des extrémités, et l'organe d'accouplement (37) comporte deux bras élastiques (49a, 49b) entre lesquels le plot (43) peut se loger afin qu'il provoque le pivotement de l'organe à bras pivotant (42) dans le premier et le second sens autour de l'axe de pivotement.

3. Appareil selon la revendication 2, dans lequel les bras élastiques (49a, 49b) délimitent entre eux un trajet le long duquel le plot (43) est guidé pendant le déplacement de l'organe à bras pivotant (42).

4. Appareil selon la revendication 2, comprenant en outre un troisième coulisseau de sélection de mode (22) monté sur le châssis (21) afin qu'il se déplace par rapport au châssis (21) entre des positions de travail et de repos le long d'un trajet sensiblement parallèle aux trajets de déplacement du premier et du second coulisseau (24, 25), et un dispositif à ressort (35) rappelant le troisième coulisseau (22) vers sa position de repos, et l'axe de pivotement de l'organe à bras pivotant (42) est disposé sur le troisième coulisseau (22) afin que l'organe à bras pivotant (42) se déplace dans la troisième direction à la suite du déplacement du troisième coulisseau (22) vers sa position de travail.

FIG.I

EP 0 133 045 B1

FIG.2

# FIG.3A

EP 0 133 045 B1

FIG.3B

FIG.3C

# FIG.4

# FIG.5A

# FIG.5B

# FIG.5C

FIG.6

# FIG.7

# FIG.8

# FIG.9

# FIG.10

# FIG.11A

# FIG.11B

# FIG.11C

# FIG.12

# FIG.13

# FIG.14

# FIG.15

# FIG.16

15

# FIG.17A

# FIG.17B

# FIG.18

# FIG.19

# FIG.20

17

FIG.21